# EUROPEAN PATENT APPLICATION

(11) **EP 2 712 937 A1**
(43) Date of publication of application: **02.04.2014**
(21) Application number: 12789781.7
(22) Date of filing: 10.05.2012
(51) Int. Cl.: C21C 5/30, C21C 5/46, C21C 7/072, C21C 1/00

(54) **COOLED LANCE FOR INJECTING INTO A METALLURGICAL VESSEL**

(30) Priority: 20.05.2011 BR PI1102243
(71) Applicant: Magnesita Refratários S/A, 32210-050 Contagem - MG (BR)
(72) Inventor: ALVES FREIRE, Rubens, Belo Horizonte - MG (BR); CRUZ ARANTES CAMPOS, Leonardo, Belo Horizonte - MG (BR); LIMA DE SIQUEIRA, Jorge, CEP: 35160-272 Ipatinga - MG (BR)
(74) Representative: Cohausz & Florack
(86) International application number: PCT/BR2012/000132
(87) International publication number: WO 2012/159179

(57) **Abstract**

The present invention relates to a cooled lance for injection into metallurgical vessels, composed by an inner tube or pipe (2), with an inlet (5) for gas at the upper part of the injection lance and outlets (6) for the gas at the lower part (1), and at least one outer tube or pipe (3) that forms a cooling jacket with the inner tube or pipe (2), wherein the inner tube or pipe (2) is fixed at only one point at said at least one outer tube or pipe (3) and the gas flow takes place only through the cooling jacket formed between the inner tube or pipe (2) and the outer tube or pipe (3).

## Description

The present invention relates to a cooled lance to be used preferably, although not exclusively, in injecting gases such as argon or nitrogen, either combined or not with solid particles, in metallurgical vessels for refining steel or pig iron.

### Description of the Prior Art

Lances for injecting gases and/or feeding solids into metallurgical vessels are known from the prior art, and are usually positioned at the top of the metallurgical vessel, that, is, either in vertical position or at a given angle with the vertical.

The usual construction of these lances foresees a tube or central pipe for feeding gas and/or mixture of gas with crushed solid elements, the refractory concrete being positioned on the outside, which is in contact with the metallic bath. There are also patents that foresee a cooling sleeve around the tube or metallic duct, where the cooling fluid is circulated, which may be a liquid, a mixture of liquid atomized with gas or just a gas. There is still the possibility of providing an intermediate sleeve between the tube or the central pipe and the cooling sleeve for gas passage. The tube or central pipe may or may not have, at its exit, a device for accelerating the gas velocity. Such prior -art solutions are presented in documents PI9710304-7, US 6,432,165 B1, WO 03/023073 A1 and WO 2004046391 A1.

All the prior-art solutions always seek to provide the injection of gases and/or solids into the metallurgical vessel in a safe manner and preferably for a number of utilization cycles. Due to the high temperatures that reign inside the metallurgical vessels, the useful life of the lances is limited, in spite of the refractory concrete covering and the use of a cooling jacket.

The objective of the present invention is to provide a lance for injecting gases and/or mixture of gases with solids into metallurgical vessels, provided with a construction that is simplified with respect to the prior art, resulting in an efficient cooling and, by virtue of the optimized internal arrangement, in a greater mechanical strength of its components, thusachieving a longer useful life.

### Brief Description of the Invention

The use of an efficient cooling system provides a significant prolongation of the useful life of the lance by virtue of the reduction of the temperature in the metallic parts, imparting greater mechanical strength to the lance. It also diminishes the thermal expansion of the concrete/metallic assembly, which reduces the occurance of cracks and reduces the penetration of liquid metal and slag into the refractory and, as a result, damages to the internal metallic structure of the lance.

As stated above, in the prior art the injection lance cooling sys-tem is usually constituted by a chamber between at least two tubes or pipes that are concentric with the cooling system, independently of the flow of material to be injected into the metal bath. The present invention, in turn, uses the internal flow of gas being injected to cool the metallic structure, thus eliminating the need for an independent cooling system. In this way, there is a significant reduction in the lance manufacture and operation costs.

The system of the present invention results in the internal structure of the injection lance working at lower temperatures, thus diminishing the mechanical stresses on the refractory, preventing the enhanced warping and preserving the structural function of the metallic components of the lance. In this context, the constructive characteristics of the present invention relating to the refrigeration with the injection gas itself and to the support of the inner tube or pipe along its length are relevant for achieving the positive effects with respect to the prior-art pieces of equipment.

Usually, the fixation between the tubes or pipes that compose the lance is made by weld at various points along the length. In the present invention, the fixation of the inner tube or pipe with respect to the cooling jacket is made only at one point, preferably at the upper part. Along the body of the inner tube or pipe, only radial supports are provided so as to enable relative movement between the inner tube or pipe and the cooling jacket. In this way, no rupture of the welded connections will occur as a result of dimensional variations caused by thermal cycles. Additionally, the inner tube or pipe is sealed at the lower part, which faces the bottom of the metallurgical vessel. As a result of this closing, the whole gas flow is directed by the cooling jacket, the inner tube or pipe acting essentially as a mechanical element for supporting the lance.

It should be noted that the present invention can also be used on lances having more than one tube or external pipe arranged concentrically or not with respect to the inner tube or pipe.

### Brief Description of the Drawings

The present invention will now be described in greater detail with reference to an embodiment represented in the drawings. The figures show:
- Figure 1 is a longitudinal section view of the lance of the present invention;
- Figure 2 is a view of the cross-section A-A of the lance shown in figure 1;
- Figure 3 is a view of the cross-section C-C of the lance shown in figure 1;
- Figure 4 is a cross-sectional view of the joining region of the inner tube or pipe with the cooling jacket;
- Figure 5 is a view of the cross-section B-B of the lance shown in figure 4;
- Figure 6 is a view of the cross-section D-D of the lance shown in figure 4;
- Figure 7 is a longitudinal section view of the final region of the inner tube or pipe;
- Figure 8 is a longitudinal section view of the lance; and
- Figure 9 is a longitudinal section view of the lance showing the gas flow inside it.

### Detailed Description of the Figures

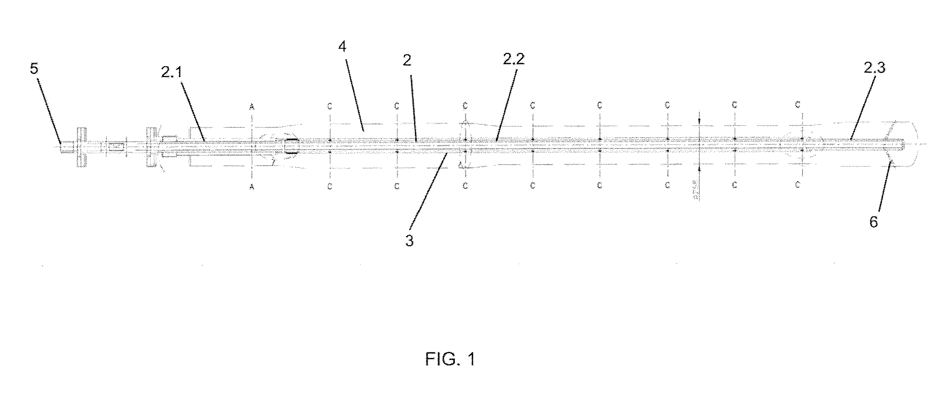

As can be seen in figure 1, the injection lance 1 in an embodiment of the present invention has an inner tube or pipe 2 and an outer tube or pipe 3, made of carbon steel. Between both of them, in the intermediate section of the injection lance 1, a cooling jacket is formed, through which the gas to be injected flows. The inner tube or pipe 2 has three different sections. The initial section 2.1 is close to the gas inlet 5 and extends as far as the junction with the intermediate section 2.2. The intermediate section 2.2 acts essentially as an inner wall of the cooling jacket of the injection lance 1. Finally, the end section 2.3 receives the gas flow from the cooling jacket of the intermediate section 2.2 inside it and leads it as far as the outlets 6.

The injection lance 1 further has a refractory concrete coating 4, shown in dashed lines in figure 1. This refractory coating may have a usually uniform cylindrical shape throughout its length or may have steps as a function of determined areas of greater wear of the refractory concrete 4, such as the part of contact with the slag and gas injection part.

The injection lance 1, which is usually positioned either in vertical position or at an angle with the vertical, receives the gas through the inlet 5, located on the outside of the metallurgical vessel, which is injected into the liquid metal at the outlet 6.

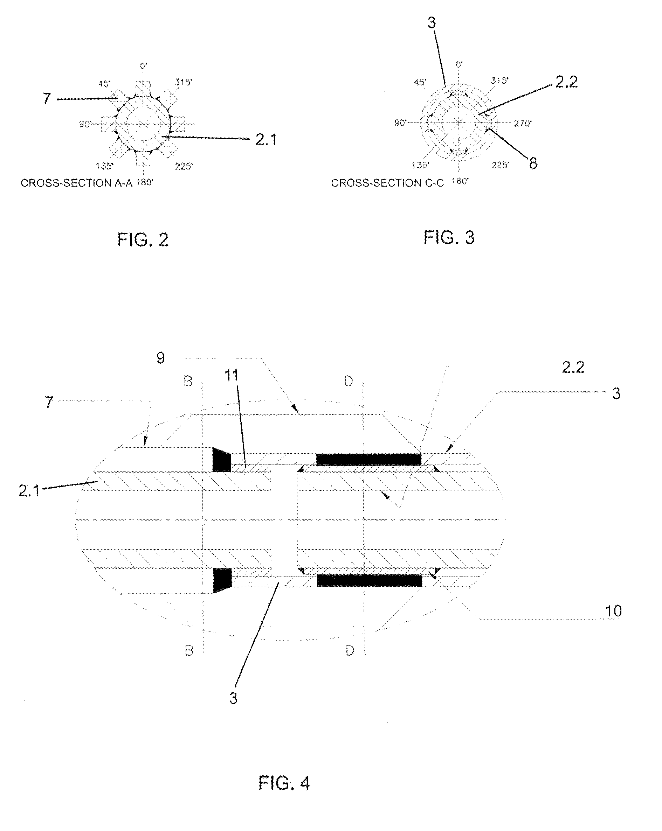

In the upper region of the injection lance 1, that is, the one that is close to the gas inlet 5, the inner tube or pipe 2 has, in its section 2.1, as can be seen in figure 2, radial ribs 7 that are uniformly spaced from each other. These ribs 7 are intended to impart mechanical stability to the section 2.1 of the inner tube or pipe 2 in this stretch.

On the other hand, the cross-section C-C in figure 3 shows the centralized supports 8, positioned between the inner tube or pipe 2 and the outer tube or pipe 3. These centralized supports 8, which are distributed uniformly around the perimeter of the inner tube or pipe 2 at its section 2.2, are welded only to the inner tube or pipe 2 and, therefore, they can slide in the outer tube or pipe 3 in the event of relative displacement between the tubes or pipes due to thermal expansion or mechanical stress. The number of centralized supports 8 depends on the diameter of the tubes or pipes, but there should be at least three of them in order to prevent the inner tube or pipe 2 from coming into contact with the outer tube or pipe 3.

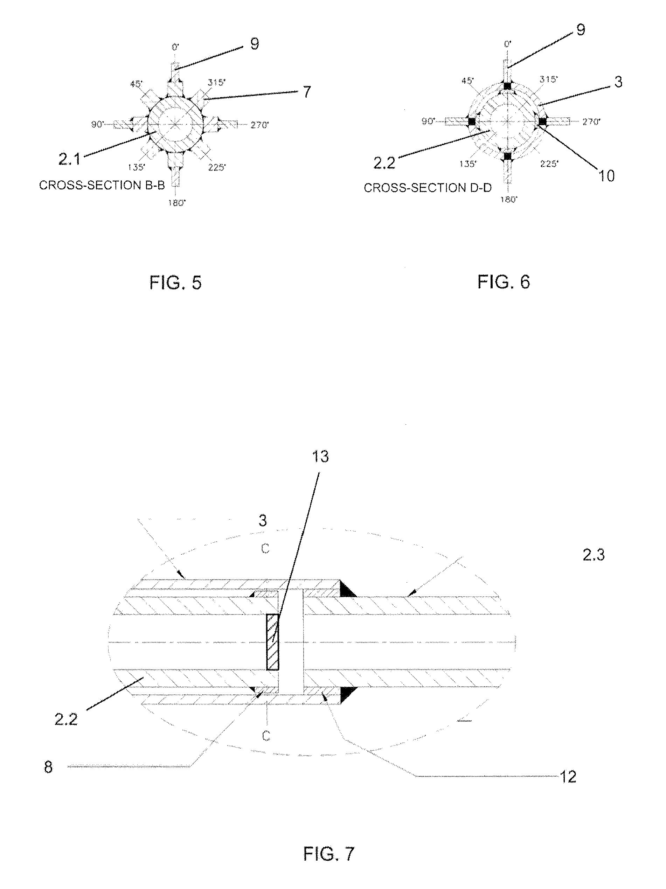

Figure 4 shows the region of union between the initial section 2.1 and the intermediate section 2.2 of the inner tube or pipe 2 by means of the outer tube or pipe 3. The union is made, on the one hand, by welding the outer tube or pipe 3 to the ribs 7, which are uniformly arranged spaced apart at the outer perimeter on the initial section 2.1 of the inner tube or pipe 2, and on the connection spacing ring 11, arranged at the end of the initial section 2.1 of the inner tube or pipe 2. This connection spacing ring 11 seals completely the gas outlet at the end of the initial section 2.1 of the inner tube or pipe 2. On the other hand, the outer tube or pipe 3 is welded to connection spacers 10 welded on the intermediate section 2.2 of the inner tube or pipe 2. On the outer tube or pipe 3 and the rib 7 a rib 9 is positioned and welded, in order to impart greater mechanical stability to the assembly in the region of the sections 2.1 and 2.2 of the inner tube or pipe 2. As can be seen in figure 5, which shows a cross-section B-B, the ribs 9 are spaced apart uniformly at the outer perimeter on the ribs 7. In the example of embodiment of the invention shown, the ribs 7 are four in number. In figure 4, there is also the cross-section D-D shown in figure 6. In this figure 6, one can see how the intermediate section 2.2 of the inner tube or pipe 2 and its connection spacers 10 are joined by weld to the outer tube or pipe 3 and the ribs 9. This is the only point of fixation of the intermediate section 2.2 of the inner tube or pipe 2 with respect to the outer tube or pipe 3.

Figure 7 shows the region where the intermediate section 2.2 of the inner tube or pipe 2 is guided with respect to the outer tube or pipe 3 on centralized supports 8. Here there is freedom of longitudinal movement or the inner tube or pipe 2 with respect to the outer tube or pipe 3. The end of the intermediate section 2.2 of the inner tube or pipe 2 is closed by a blind element 13, which prevents gas from flowing within the intermediate section 2.2 of the inner tube or pipe 2. The outer tube or pipe 3 is also joined by weld in this region to the final section 2.3 of the inner tube or pipe 2. A connection spacing ring 12 is positioned and accordingly welded between the outer tube or pipe 3 and the final section 2.3 of the inner tube or pipe, this sealing the exit of gas in this region.

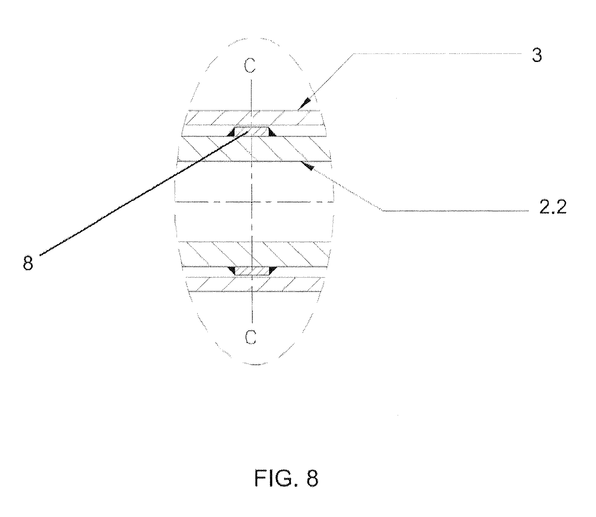

Figure 8 shows an intermediate position of the injection lance 1, where one can see the spacing provided by the centralized supports 8 between the outer tube or pipe 3 and the intermediate section 2.2 of the inner tube or pipe 2. It should be noted that the centralized supports 8 are welded only at the inner tube or pipe 2.

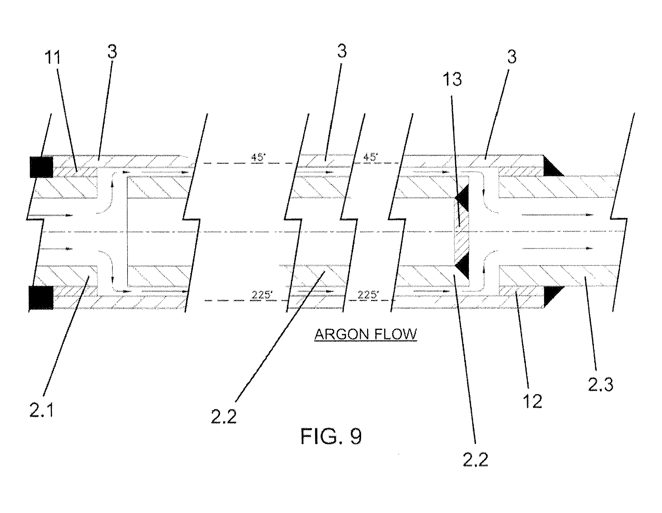

Finally, figure 9 shows the gas flow along the injection lance 1 of the present invention. Initially the gas from the inlet 5 flows through the initial section 2.1 of the inner tube or pipe 2. When the gas reaches the region of union of the initial section 2.1 with the intermediate section 2.2 of the inner tube or pipe 2, it flows through the opening existing between the two sections to the space formed between the intermediate section 2.2 and the outer tube or pipe 3. The flow toward the cooling jacket between the outer tube or pipe and the intermediate section 2.2 of the inner tube or pipe 2 takes place, since there is a blind element 13 blocking the passage of gas at the end of the intermediate section 2.2 of the inner tube or pipe 2 at the opposite end, that is, the intermediate section 2.2 of the internal tube or pipe 2 remains filled with gas, but without flow inside it. Thus, the gas acts as a thermal insulator. The junction of the intermediate section 2.2 of the inner tube or pipe 2 is to impart mechanical stability to the assembly formed by the inner tube or pipe 2 and the outer tube or pipe 3. The cooling jacket formed around the intermediate section 2.2 of the inner tube or pipe 2 and the gas that is kept under pressure within said intermediate section 2.2, enables the metal in this region to maintain relatively low temperatures, thus exhibiting good mechanical properties. At the end of the intermediate section 2.2 of the inner tube or pipe 2, where the blind element 13 is located, the gas flow from the cooling jacket again takes place within the inner tube or pipe 2, already at its final section 2.3. the connection spacing ring 12 seals completely the region of union between the outer tube or pipe 3 and the final section 2.3 of the inner tube of pipe, and so there is no passage of gas to the outside at this point.

The embodiment described above has the advantage over the prior art to use a single cooling circuit, that is, the gas injected into the metallurgical vessel is the same gas used for cooling. By virtue of its construction and the gas flow being directed completely through the cooling jacket, the inner tube or pipe 2 and the outer tube or pipe 3 exhibits lower operation temperature and, as a result, good mechanical properties, preventing warping and resulting in a longer useful life.

A preferred example of embodiment having been described, one should understand that the scope of the present invention embraces other possible variations, being limited only by the contents of the accompanying claims, which include the possible equivalents.

## Claims

1. A cooled lance for injection into metallurgical vessels, composed by an inner tube or pipe (2), with an inlet (5) for gas at the upper part of the injection lance (1) and outlets (6) for the gas at the lower part, and at least one outer tube or pipe (3) that forms a cooling jacket with the inner tube or pipe (2), **characterized in that** the an inner tube or pipe (2) is fixed at only one point at said at least one outer tube or pipe (3) and the gas flow in the cooling-jacket region formed between the inner tube or pipe (2) and said at least one outer tube or pipe (3) takes place only inside said cooling jacket.

2. A lance according to claim 1, **characterized in that** the inner tube or pipe (2) has an initial section (2.1), an intermediate section (2.2) and a final section (2.3).

3. A lance according to claim 1 or 2, characterized ion that the cooling jacket is formed between the intermediate section (2.2) of the inner tube or pipe (2) and said at least one outer tube or pipe (3).

4. A lance according to any one of claims 1 to 3, **characterized in that** the inner tube or pipe (2) has centralized supports (8) at its intermediate section (2.2) welded only to the inner tube or pipe (2).

5. A lance according to any one of claims 1 to 4, **characterized in that** the inner tube or pipe (2) is fixed to at least one outer tube or pipe (3) by weld between connection spacers (10) positioned in the inner tube or pipe (2) and ribs (9) located under said at least one outer tube or pipe (3).

6. A lance according to any one of claims 1 to 5, **characterized in that** the inner tube or pipe (2) has, at the end of the intermediate section (2.2) close to the final section (2.3), a blind element (13) welded so as to seal the inner tube or pipe (2).

7. A lance according to claim 2, **characterized in that** the initial section (2.1) has ribs (7) distributed uniformly around the perimeter of the inner tube or pipe (2).

8. A lance according to claim 2 or 7, **characterized in that** the initial section (2.1) has a connection spacing ring (11) welded sealingly with respect to said at least one outer tube or pipe (3).

9. A lance according to claim 2, **characterized in that** the final section (2.3) has a connection spacing ring (12) welded sealingly with respect to said at least one outer tube or pipe (2).

10. A lance according to any one of claims 1 to 9, **characterized by** having a refractory concrete coating with continuous or stepped cylindrical section.
